# EUROPEAN PATENT SPECIFICATION

(11) **EP 2 794 810 B1**
(45) Date of publication and mention of the grant of the patent: **15.11.2017**
(21) Application number: 12859541.0
(22) Date of filing: 17.12.2012
(51) Int. Cl.: C09K 8/594, E21B 43/16

(54) **OIL RECOVERY PROCESS**
ÖLGEWINNUNGSVERFAHREN
PROCÉDÉ DE RÉCUPÉRATION DE PÉTROLE

(30) Priority: 22.12.2011 US 201161579523 P
(43) Date of publication of application: 29.10.2014
(73) Proprietor: Shell Internationale Research Maatschappij B.V., 2596 HR The Hague (NL)
(72) Inventor: BLOM, Carolus Petrus Adrianus, Muscat 113 (OM); HEDDEN, Ralf, NL-2289EE Rijswijk (NL); MATZAKOS, Andreas Nicholas, Missouri City, TX 77459 (US); UEHARA-NAGAMINE, Ernesto, Houston, TX 77082 (US)
(74) Representative: Matthezing, Robert Maarten
(86) International application number: PCT/US2012/070093
(87) International publication number: WO 2013/096198

(56) References cited:
- WO-A2-2010/002693
- US-A- 2 859 818
- US-A- 4 299 286
- US-A- 4 643 253
- US-A- 4 722 396
- US-A1- 2011 272 162
- US-B1- 6 619 396

## Description

### Field of the Invention

The present invention is directed to a method of recovering oil from a formation, in particular, the present invention is directed to a method of enhanced oil recovery from a formation.

### Background of the Invention

In the recovery of oil from subterranean formations, it is possible to recover only a portion of the oil in the formation using primary recovery methods utilizing the natural formation pressure to produce the oil. A portion of the oil that cannot be produced from a formation using primary recovery methods may be produced by Enhanced Oil Recovery (EOR) methods. There are three main types of EOR-thermal, chemical/polymer and gas injection-which may be used to increase oil recovery from a reservoir beyond what can be achieved by conventional means - possibly extending the life of a field and boosting the oil recovery factor.

Thermal enhanced recovery works by adding heat to the reservoir. The most widely practiced form is a steam drive, which reduces oil viscosity so that it can flow to the producing wells. Chemical flooding increases recovery by reducing the capillary forces that trap residual oil. Polymer flooding improves the sweep efficiency of injected water. Miscible gas injection works in a similar way to chemical flooding-by injecting a fluid that is miscible with the oil, trapped remaining oil can be recovered.

In miscible gas injection, a gas that is miscible with oil in place in the formation is injected into the formation. The injected gas dissolves in the oil forming a single phase solution with the oil, mobilizing the oil by swelling the oil, thereby reducing the viscosity of the oil, and by reducing the interfacial tension between the oil and water in the formation, thereby reducing the capillary forces that hold the oil in place in the formation. The mobilized oil may be displaced to a production well and recovered from the formation. Gases that have been utilized in miscible gas injection for enhanced oil recovery include ethane, propane, butane, liquid petroleum gases formed of C₂ to C₆ paraffinic hydrocarbons, synthesis gas (carbon monoxide and hydrogen), nitrogen, natural gas, and carbon dioxide. US2859818 discloses the use of carbons having from 2 to 4 carbon atoms to dissolve oil in a formation.

In order for gas injection to provide effective recovery of oil from a formation by mobilizing the oil, the gas and the oil must be miscible under the formation conditions. The pressure and temperature of the formation, the nature of the oil in the formation, and the components of the gas determine the miscibility of the gas with oil in the formation. Gases that have components that are more similar to the oil in the formation are more miscible than gases that are less similar to the oil. Therefore, hydrocarbon-containing gases having higher carbon numbers (e.g. propane (C3) and butane (C4)) are more miscible in oil (typically formed of hydrocarbons having carbon numbers of C5 and greater) than methane (C1) or carbon dioxide. Higher formation pressure (e.g. > 50 MPa) also facilitates miscibility of the gas with oil in the formation, where gases that have relatively low miscibility in the oil at low pressures may be miscible in the oil in the formation due to the pressure in the formation.

Associated gas is a form of natural gas frequently produced in conjunction with the production of oil from a formation. Associated gas is often considered a waste product, particularly when produced from remotely located formations having no access to a gas pipeline. Waste associated gas is commonly flared to dispose of the associated gas. Alternatively, a carbon source can be converted to synthesis gas which synthesis gas subsequently is converted to an ether such as described in WO2010/002693.

Associated gas is commonly comprised of at least 70 mol% methane, and may contain upwards of 75 mol%, or 80 mol%, or 90 mol% methane. Methane is miscible with oil at higher pressures (e.g 100 MPa at 100°C and), however, is immiscible with oil at lower pressures (e.g. less than 50 MPa) since the pressure is below the minimum miscibility pressure required to establish multiple contact miscibility of methane with the oil. As a result, associated gas or other gases formed primarily of methane have been unsuitable for use as a miscible gas for enhanced oil recovery from formations having a pressure of less than 50 MPa.

It is desirable to be able to utilize associated gas, or another hydrocarbon-containing gas, that contains a large mole fraction of methane as a gas in a miscible gas enhanced oil recovery process.

### Summary of the Invention

The present invention is directed to a method for recovering oil from an oil-bearing formation, comprising:
injecting a hydrocarbon-containing gas comprising at least 70 mol% methane and an ether containing from 2 to 4 carbon atoms into the formation;
contacting the hydrocarbon-containing gas and the ether with oil in the formation to mix the hydrocarbon-containing gas and ether with the oil; and
producing oil from the formation.

### Brief Description of the Drawings

Figure 1 illustrates a well pattern.
Figure 2 illustrates a schematic of an oil production system.
Figure 3 is a graph of oil recovery relative to pore volume injected of an injectant containing selected quantities of dimethyl ether.
Figure 4 is a graph illustrating the minimum miscibility enrichment point of an oil with dimethyl ether.

### Detailed Description of the Invention

The present invention is directed to a method for utilizing a hydrocarbon-containing gas comprising at least 70 mol% methane in a miscible gas enhanced oil recovery process to recover oil from an oil-bearing formation. The formation may have a pressure below the minimum miscibility pressure of the hydrocarbon-containing gas with the oil in the formation. The hydrocarbon-containing gas is contacted with oil in the formation in the presence of an ether having from 2 to 4 carbons. The mixture of the hydrocarbon-containing gas and the ether may have a minimum miscibility pressure with the oil in the formation that is below the pressure of the formation or the mixture of the hydrocarbon-containing gas and the ether may be injected into the formation at a pressure above the minimum miscibility pressure of the mixture of the hydrocarbon-containing gas and the ether with the oil in the formation, so the mixture of the hydrocarbon-containing gas and the ether is multiple contact miscible with the oil in the formation. The mixture of the hydrocarbon-containing gas and the ether, therefore, mobilizes the oil for recovery from the formation.

The oil in a formation may be recovered following primary recovery by injecting a hydrocarbon-containing gas comprising at least 70 mol% methane and an ether comprising from 2 to 4 carbon atoms into the formation through first well that extends into the formation. In a preferred embodiment of the method of the present invention, the hydrocarbon-containing gas is associated gas produced from the formation and the ether is dimethyl ether. The pressure of the formation at the location in the formation where the hydrocarbon-containing gas and ether are injected may be below the minimum miscibility pressure required for multiple contact miscibility with the hydrocarbon-containing gas, but may be above the pressure required for multiple contact miscibility with the mixture of the hydrocarbon-containing gas and the ether. The hydrocarbon-containing gas and the ether are contacted with the oil in the formation to mix the hydrocarbon-containing gas and the ether with the oil and thereby mobilize the oil. The mobilized mixture of oil, hydrocarbon-containing gas, and ether may be driven across the formation by further injection of the hydrocarbon-containing gas and ether, and oil may be produced from the formation via a second well extending into the formation or adjacent to the formation, where the second well is located a distance from the first well. An oil-immiscible displacement fluid may be injected into the formation through the first well subsequent to injecting the hydrocarbon-containing gas and the ether into the formation to drive the mobilized oil to the second well for production of the oil from the second well.

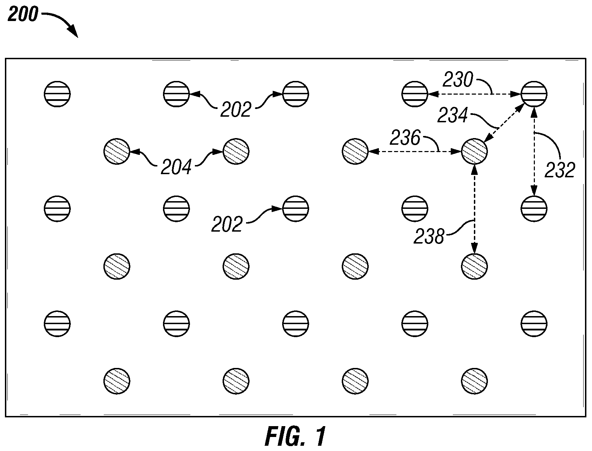

Referring now to Figure 1, an array of wells 200 is illustrated. Array 200 includes a first well through which the hydrocarbon-containing gas and the ether are injected into the formation, included in first well group 202 (denoted by horizontal lines), and a second well from which oil is produced, included in second well group 204 (denoted by diagonal lines).

Each well in first well group 202 may be spaced a horizontal distance and a vertical distance from adjacent wells in the first well group, where each horizontal distance between adjacent wells of the first well group 202 may be roughly equal and the vertical distance between adjacent wells of the first well group 202 may be roughly equal. Each well in first well group 202 may have a horizontal distance 230 from an adjacent well in first well group 202. Each well in first well group 202 may have a vertical distance 232 from an adjacent well in first well group 202.

Each well in the second well group 204 may be spaced a horizontal distance and a vertical distance from adjacent wells in the second well group, where each horizontal distance between adjacent wells of the second well group may be roughly equal and each vertical distance between adjacent wells of the second well group may be roughly equal. Each well in second well group 204 may have a horizontal distance 236 from an adjacent well in second well group 204. Each well in second well group 204 may have a vertical distance 238 from an adjacent well in second well group 204.

The wells of the first well group 202 have a distance from adjacent wells of the second well group 204. Each well in first well group 202 may have a distance 234 from the adjacent wells in second well group 204. Each well in second well group 204 may have a distance 234 from the adjacent wells in first well group 202.

In some embodiments, each well in first well group 202 is surrounded by four wells in second well group 204. In some embodiments, each well in second well group 204 is surrounded by four wells in first well group 202.

In some embodiments, horizontal distance 230 is from about 5 to about 1000 meters, or from about 10 to about 500 meters, or from about 20 to about 250 meters, or from about 30 to about 200 meters, or from about 50 to about 150 meters, or from about 90 to about 120 meters, or about 100 meters.

In some embodiments, vertical distance 232 is from about 5 to about 1000 meters, or from about 10 to about 500 meters, or from about 20 to about 250 meters, or from about 30 to about 200 meters, or from about 50 to about 150 meters, or from about 90 to about 120 meters, or about 100 meters.

In some embodiments, horizontal distance 236 is from about 5 to about 1000 meters, or from about 10 to about 500 meters, or from about 20 to about 250 meters, or from about 30 to about 200 meters, or from about 50 to about 150 meters, or from about 90 to about 120 meters, or about 100 meters.

In some embodiments, vertical distance 238 is from about 5 to about 1000 meters, or from about 10 to about 500 meters, or from about 20 to about 250 meters, or from about 30 to about 200 meters, or from about 50 to about 150 meters, or from about 90 to about 120 meters, or about 100 meters.

In some embodiments, distance 234 is from about 5 to about 1000 meters, or from about 10 to about 500 meters, or from about 20 to about 250 meters, or from about 30 to about 200 meters, or from about 50 to about 150 meters, or from about 90 to about 120 meters, or about 100 meters.

In some embodiments, array of wells 200 may have from about 10 to about 1000 wells, for example from about 5 to about 500 wells in first well group 202, and from about 5 to about 500 wells in second well group 204.

In some embodiments, array of wells 200 is seen as a top view with first well group 202 and second well group 204 being vertical wells spaced on a piece of land. In some embodiments, array of wells 200 is seen as a cross-sectional side view with first well group 202 and second well group 204 being horizontal wells spaced within the formation.

The formation into which the hydrocarbon-containing gas and the ether are injected is an oil-bearing formation. The formation may have a pressure below the minimum miscibility pressure required for multiple contact miscibility of the hydrocarbon-containing gas with the oil in the formation. The formation may have a formation pressure at the location the hydrocarbon-containing gas and the ether are contacted with oil that is above the minimum miscibility pressure required for multiple contact miscibility of the mixture of the hydrocarbon-containing gas and the ether with the oil. The formation may have a pressure of less than 50 MPa, or at most 45 MPa, or at most 40 MPa, or from 5 MPa up to 50 MPa, or from 10 MPa to 40 MPa. The formation may be a relatively shallow formation, where the formation is located at a depth of from 100 to 1500 meters, or from 200 to 1000 meters, or from 300 to 800 meters.

The formation preferably is conducive to a miscible gas flood for enhanced oil recovery. The formation may have a enough permeability so the mobilized oil may be driven from the first well injection site to the second well for production from the second well. The formation may have a permeability of from 0.0001 to 1 Darcy. The formation also preferably has relatively few fractures in the flow path between the first well injection site and the second well production site so the flow of the mobilized oil between the injection site and the production site is relatively unimpeded. If the formation has a relatively large number of fractures, the first well injection site and the second well production site may be located more closely together to reduce the effect of the fractures on the flow of the mobilized oil to the production well than if the formation has relatively few fractures.

The oil in the formation may have a relatively low viscosity so the oil is relatively easily soluble with the mixture of the hydrocarbon-containing gas and the ether. The oil in the formation may have a viscosity of at most 15 cP, or at most 10 cP, or at most 5 cP, or from 0.1 to 15 cP, or from 0.5 cP to 10 cP, or from 1cP to 5 cP.

The formation may contain connate water in contact with the oil in the formation, where the interfacial tension between the connate water and the oil in the formation may be partially responsible for retention of the oil in the formation. Contact of the hydrocarbon-containing gas and the ether with the oil may reduce the interfacial tension between the oil and the connate water by changing the physical characteristics of the oil upon miscibilization of the oil with the hydrocarbon-containing gas and the ether, enabling the mobilization of the oil for production from the formation. The interfacial tension of the oil and the connate water may range from 15 to 25 dynes/cm at 15°C and a pressure of 34.4 kPa (5 psi) which may be reduced by at least 10% or at least 15%, or at least 20% upon miscibilization of the oil with the hydrocarbon-containing gas and the ether.

The hydrocarbon-containing gas injected into the formation with the ether contains at least 70 mol% methane. The hydrocarbon-containing gas may contain at least 80 mol% methane, or at least 85 mol% methane, or at least 90 mol% methane, or at least 95 mol% methane, or may contain from 70 to 99 mol% methane, or from 75 to 95 mol% methane. The hydrocarbon-containing gas may also contain from 0.1 mol% to 15 mol%, or from 0.5 mol% to 10 mol%, or from 1 mol% to 5 mol% of C₂ to C₆ hydrocarbons including ethane, propane, butanes, pentanes, and hexanes. The hydrocarbon-containing gas may also contain carbon dioxide and hydrogen sulfide, for example from 0.1 mol% to 10 mol% carbon dioxide, and from 0.1 mol% to 5 mol% hydrogen sulfide. The hydrocarbon-containing gas may be natural gas.

In a preferred embodiment of the invention, the hydrocarbon-containing gas is an associated gas produced from the formation. The associated gas may be produced from the formation in conjunction with the production of oil from the formation. Preferably the associated gas is stranded gas.

The ether injected into the formation with the hydrocarbon-containing gas may have from 2 to 4 carbon atoms. The ether may be dimethyl ether, diethyl ether, or methyl ethyl ether. Preferably the ether is dimethyl ether. The ether to be injected into the formation may be produced according to conventional methods of producing the type of ether selected for injection into the formation. The ether injected into the formation may be in liquid phase or in gas phase when injected into the formation, and, if injected into the formation in liquid phase, may vaporize upon being injected into the formation depending on temperature and pressure conditions in the formation.

The hydrocarbon-containing gas and the ether are mixed prior to or upon injecting the hydrocarbon-containing gas and the ether into the formation. The hydrocarbon-containing gas and the ether may be mixed before injection into the formation and then injected as a mixture into the formation. Alternatively, the hydrocarbon-containing gas and the ether may be mixed in the injecting well prior to contact with the oil in the formation, for example using an in-line mixer. Alternatively, the hydrocarbon-containing gas and the ether may be injected separately into the formation so the hydrocarbon-containing gas and the ether mix upon entering the formation and contacting the oil.

The mixture of the hydrocarbon-containing gas and the ether is selected to contain a sufficient amount of the ether so that the mixture is miscible with the oil in the formation upon multiple contact at the pressure at which the mixture is contacted with the oil. In particular, the mixture of the hydrocarbon-containing gas and the ether contains a sufficient amount of the ether so that the mixture has a minimum miscibility pressure with the oil in the formation that is no higher than, and preferably is below, the formation pressure at which the mixture is contacted with the oil. It may be desirable to include an additional amount of ether in the mixture (over the amount required to provide the mixture with a minimum miscibility pressure with the oil in the formation that is no higher than the formation pressure at which the mixture is contacted with the oil), where the additional amount of ether may further reduce the minimum miscibility pressure of the mixture of the hydrocarbon-containing gas and the ether with the oil, further enhancing the miscibility of the mixture with the oil.

The amount of ether sufficient to render the mixture of the hydrocarbon-containing gas and the ether miscible with the oil in the formation upon multiple contact at the pressure at which the mixture is contacted with the oil (i.e. the amount of ether required for the mixture to have a minimum miscibility pressure with the oil no higher than the pressure at which the mixture is contacted with the oil in the formation) is dependent on the formation conditions, particularly the formation pressure, the composition of the oil, the viscosity and density of the oil, the composition of the hydrocarbon-containing gas utilized, the ether utilized, and the pressure at which the mixture of the hydrocarbon-containing gas and the ether is injected into the formation. The amount of ether required for use in the mixture to provide miscibility of the mixture with the oil in the formation, therefore, may vary depending on several factors. The amount of ether required for use in the mixture to provide the requisite miscibility of the mixture with the oil in the formation at the formation pressure at which the mixture is contacted with the oil, however, may be determined by simple miscibility experiments at the pressure of the formation using samples of the oil from the formation, the hydrocarbon-containing gas, and the ether. Typically, the amount of ether required for use in the mixture to provide the requisite miscibility of the mixture with the oil in the formation at the formation pressure at which the mixture is contacted with the oil is at least 5 mol% of the ether in the mixture of the hydrocarbon-gas and the ether, or at least 10 mol%, or from 5 mol% to 25 mol%, or from 10 mol% to 20 mol% of the ether in the mixture of the hydrocarbon-containing gas and the ether. In an embodiment of the method of the present invention, the amount of ether provided in the mixture of the hydrocarbon-containing gas and the ether that is injected into the formation for contact with the oil is from 5 mol% to 45 mol%, or from 10 mol% to 40 mol% of ether in the mixture.

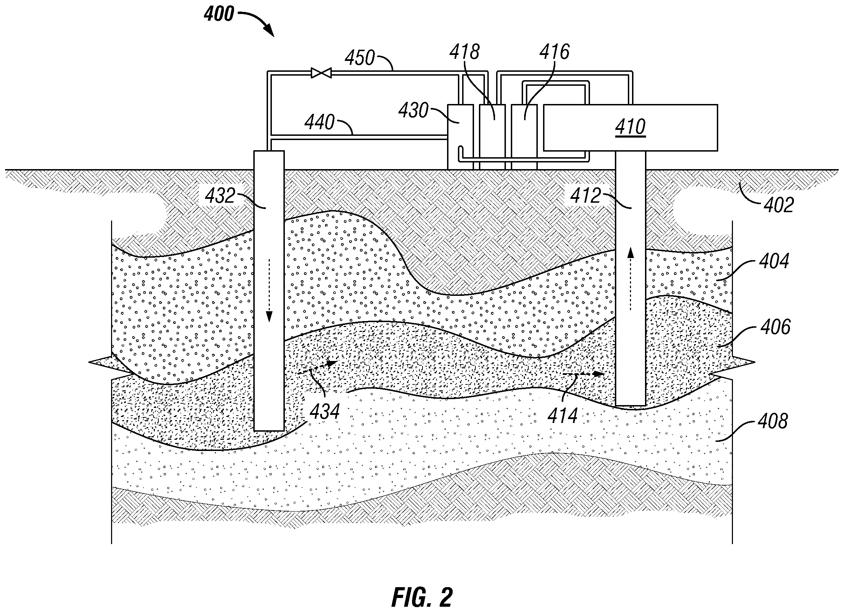

Referring now to Figure 2, the ether and the hydrocarbon-containing gas may be injected into a subterranean formation comprising formation portions 402, 404, 406, and 408, where the ether and the hydrocarbon-containing gas are injected into formation 406 through an injection well 432 which traverses formation portions 402 and 406 and has openings at formation portion 406. The ether may be stored in ether storage 430 and the hydrocarbon-containing gas may be stored in gas storage 418. As discussed above, the hydrocarbon-containing gas may be mixed with the selected amount of ether prior to providing the mixture to the injection well 432, where the mixture may be provided to the injection well 432 through line 440 for injection into the formation 406. Alternatively, the hydrocarbon-containing gas may be provided to the injection well 432 through line 450 and the selected amount of ether may be provided to the injection well 432 through line 440, and the hydrocarbon-containing gas and the ether may be mixed in the injection well 432 prior to injection into the formation 406, or the hydrocarbon-containing gas and the ether may be injected separately but in close proximity into the formation 406 so the hydrocarbon-containing gas and the ether mix upon entering the formation 406. As used hereafter, the term "the hydrocarbon-containing gas and ether mixture", or the "mixture" when referring to a mixture of the hydrocarbon-containing gas and the ether, is intended to include the hydrocarbon-containing gas and the ether that are injected separately into the formation that mix within the formation as well as mixtures of the hydrocarbon-containing gas and the ether that are mixed prior to or during injection into the formation.

The hydrocarbon-containing gas and ether mixture is preferably injected into portions 434 of the formation 406 at a pressure at least slightly above the formation pressure at the formation portions 434 to ensure that the mixture enters the formation 406 and drives oil mobilized by the injected mixture towards oil production well 412. The formation pressure may be determined by conventional methods for determining the pressure of a formation. If the formation pressure at formation portions 434 is below the minimum miscibility pressure of the hydrocarbon-containing gas and ether mixture with oil in the formation, the hydrocarbon-containing gas and ether mixture may be injected into the formation 406 at a pressure greater than the formation pressure, and preferably greater than the minimum miscibility pressure of the mixture with the oil in the formation.

The amount of the hydrocarbon-containing gas and ether mixture injected into the formation 406 may preferably range from 0.2 to 0.6 of the formation pore volume per injection, or from 0.25 to 0.5 of the formation pore volume per injection. The formation pore volume may be determined by methods conventional in the art. As discussed in further detail below, multiple injections of slugs of the hydrocarbon-containing gas and ether mixture may be injected into the formation 406 to enhance recovery of oil from the formation.

The hydrocarbon-containing gas and ether mixture is contacted with oil in the formation 406 by injection of the mixture into the formation at a formation portion 434 where the oil is present in the formation. Upon contact with the oil, the hydrocarbon-containing gas and ether mixture becomes miscible with the oil because the minimum miscibility pressure of the mixture with the oil is at or below the pressure of the formation at the formation portion 434. As the hydrocarbon-containing gas and ether mixture is injected into the formation 406 and contacted with the oil, the mixture may extract light hydrocarbons (e.g. C₂ to C₆ hydrocarbons) thereby developing a hydrocarbon-containing solution at the interface between the mixture and the oil. As the injection front proceeds through the formation from formation portion 434 towards formation portion 414 and the production well 412 the hydrocarbon-containing solution may be able to dissolve heavier hydrocarbons which enter the solution, and may eventually produce a single phase mobilized oil front that is driven through the formation to formation portion 414 and produced through the production well 412.

As the hydrocarbon-containing gas and ether mixture becomes miscible with the oil, the oil density and viscosity may be reduced as the light hydrocarbons from the mixture become miscible in the oil, resulting in swelling of the oil. The swelling factor of the oil after being contacted with the hydrocarbon-containing gas and ether mixture may increase by at least 25% or by at least 50% relative to the oil prior to contact with the mixture. The interfacial tension between the oil and connate water may also be reduced as the hydrocarbon-containing gas and ether mixture becomes miscible with the oil due to the changing density, viscosity, and composition of the oil. The interfacial tension between the oil and the connate water in the formation may be reduced by at least 15%, or at least 20%, or at least 25% by contact of the mixture with the oil. As a result of the miscible displacement of the oil upon contact by the hydrocarbon-containing gas and ether mixture, the oil swelling and interfacial tension reduction, the oil mobilizes and will be moved through the formation 406 for production through the production well 412.

In one embodiment of the method of the present invention, the amount of ether in the hydrocarbon-containing gas and ether mixture may be reduced after the initial injection. As the oil and the initial hydrocarbon-containing gas and ether mixture become miscible and a single phase mobilized oil is produced, the minimum miscibility pressure for multiple contact miscibility of the mixture with the mobilized oil becomes reduced relative to the minimum miscibility pressure for multiple contact miscibility of the mixture with the immobilized oil initially in place in the formation. As a result, less ether may be required in the mixture to maintain miscibility of the mixture with the oil at the formation pressure. The amount of ether in the hydrocarbon-containing gas and ether mixture may be reduced by continuously reducing the amount of ether in the mixture injected into the formation, or may be reduced by step-wise reduction of the amount of ether in the mixture injected into the formation.

Injection of the hydrocarbon-containing gas and ether mixture into the formation 406 may increase sweep efficiency for recovering and producing oil from the formation relative to injection of the hydrocarbon-containing gas alone. The hydrocarbon-containing gas and ether mixture may be more miscible with the oil in the formation than the hydrocarbon-containing gas alone. As a result, swelling of the oil by multiple contact miscibility is greater with the mixture than with the hydrocarbon-containing gas alone, increasing the size of the miscible zone and the amount of oil contacted by the mixture relative to the hydrocarbon-containing gas alone, thereby improving the sweep efficiency through the formation of the mixture relative to the hydrocarbon-containing gas alone.

In an embodiment of the method of the present invention, an oil-immiscible displacement fluid may be injected into the formation 406 after injection of hydrocarbon-containing gas and ether mixture into the formation. The oil-immiscible displacement fluid may serve to drive the oil mobilized by contact with the hydrocarbon-containing gas and ether mixture through the formation from formation portion 434 to formation portion 414 for production through the production well 412. The amount of oil-immiscible displacement fluid injected into the formation following injection of the hydrocarbon-containing gas and ether mixture may be from 1 to 5 times the volume of the mixture injected into the formation, and preferably is from 1 to 2 times the volume of the mixture injected into the formation.

Slugs of the hydrocarbon-containing gas and ether mixture and the oil-immiscible displacement fluid may be injected in an alternating pattern to enhance recovery of oil from the formation. The amount of each slug of the hydrocarbon-containing gas and ether mixture injected in such an alternating pattern may range from 0.2 to 0.6 of the formation pore volume, followed by an injection of an amount of the oil-immiscible displacement fluid from 1 to 5 times the volume of the slug of the mixture injected immediately preceding the injection of the oil-immiscible displacement fluid. Alternating slugs of the hydrocarbon-containing gas and ether mixture and the oil-immiscible displacement fluid may be injected until oil production is exhausted, typically from 3-6 times.

The oil-immiscible displacement fluid may be a liquid or a gas. Preferably the oil-immiscible fluid is selected from the group consisting of water in liquid or vapor form, an aqueous brine solution, an aqueous solution containing surfactants and/or polymers, or air.

Oil is produced from the formation 406 through the production well 412. The oil that is produced may include a portion of the miscibilized hydrocarbon-containing gas and the ether injected into the formation to mobilize the oil. Associated gas may also be produced from the formation 406 along with the oil.

The produced oil, associated gas, and ether may be provided from the production well 412 to a production facility 410. The associated gas may be separated from the oil in the production facility, for example in a gas-liquid separator, and stored in the gas storage 418 from which the associated gas may be re-injected into the formation for further oil recovery. Ether contained in the oil may also be separated from the oil in the production facility 410, for example by gas-liquid separation, or by water extraction of the oil, or by simple distillation. The separated ether may be provided from the production facility 410 for storage in the ether storage 430 from which the ether may be re-injected into the formation for further recovery of oil. The oil separated from the associated gas and the ether may be stored in oil storage 416. The oil may be further processed to produce transportation fuels, lubricants, heating fuel, chemicals, and/or polymers.

To facilitate a better understanding of the present invention, the following examples of certain aspects of some embodiments are given. In no way should the following examples be read to limit, or define, the scope of the invention. The scope of the invention is to be defined by the claims appended hereto.

### EXAMPLE 1

Slim tube experiments were conducted to determine the effect of dimethyl ether (DME) on the miscibility of associated gas with oil recovered from a formation. Dead oil recovered from a formation was filtered and mixed with associated gas produced from the same formation to reach the desired gas-to-oil ratio (91.84 cc/cc) and bubble point pressure (38.3 MPa) to produce a recombined live oil having the properties of the oil in the formation. The composition of the live oil is provided in Table 1 and the composition of the associated gas is provided in Table 2.

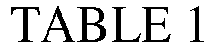

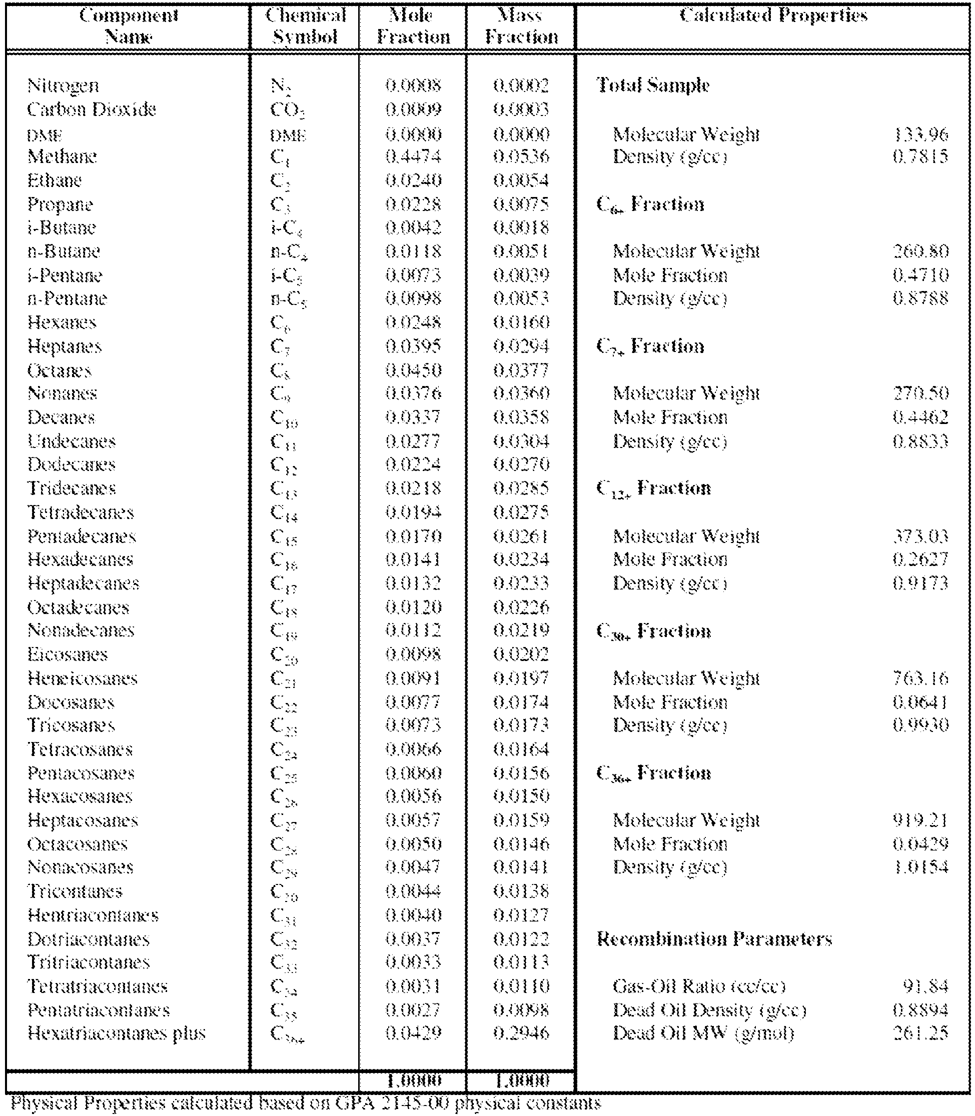

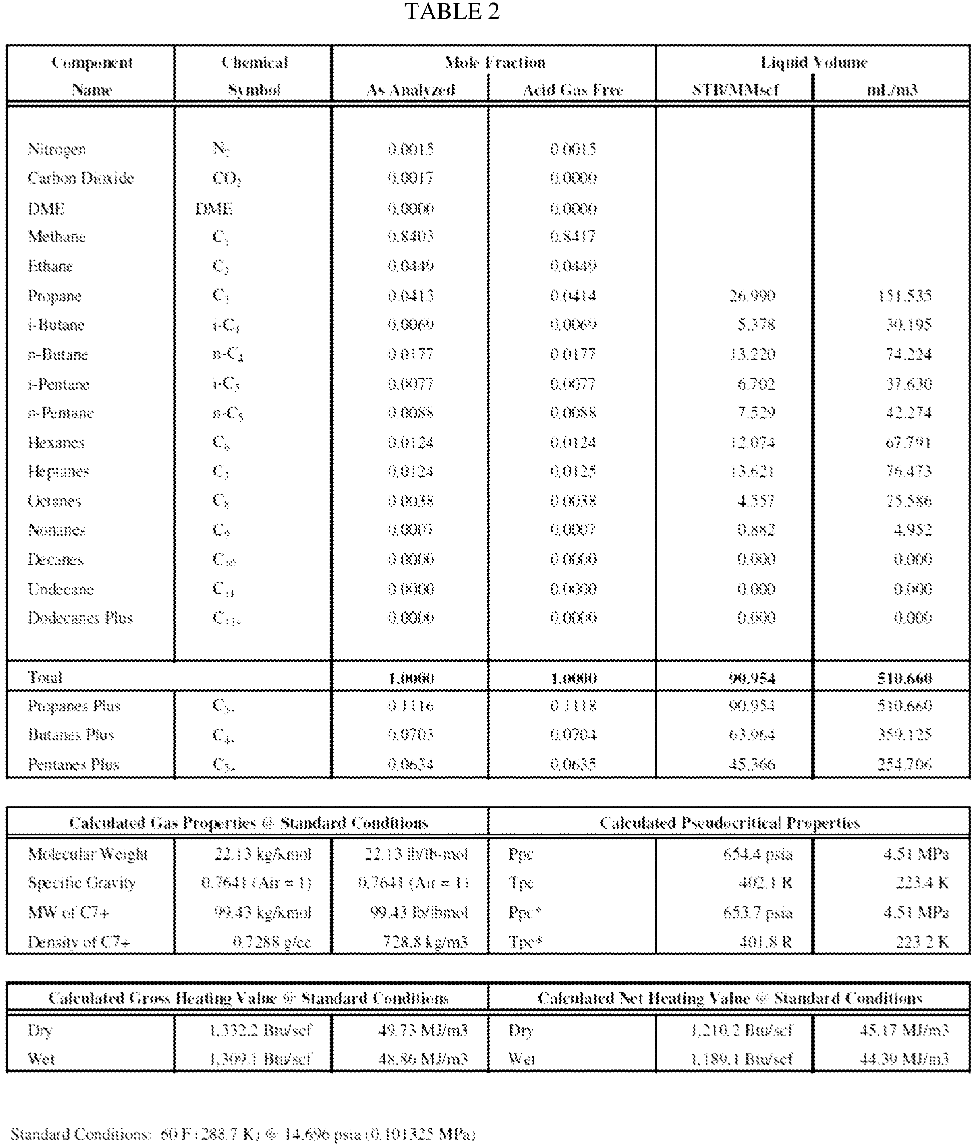

The recombined live oil was used to saturate a slim tube of ¼" (0.635 cm) inner diameter and 40' (12.19 m) length that was packed with 200 mesh sand. The pore volume of the slim tube was 141.7 cc, the slim tube had a porosity of from 40 to 44% and a permeability of from 3-4 Darcy. The slim tube was pressurized to the pressure of the formation from which the oil was recovered (38.3 MPa) and the temperature of the slim tube was adjusted to the formation temperature (79.4°C) to model the formation from which the oil and the associated gas was produced.

Samples of an associated gas/dimethyl ether mixture were prepared containing 4.9 mol%, 18.5 mol%, and 38.8 mol% dimethyl ether to formulate injection gases of different DME enrichment. Another sample was prepared containing only the associated gas.

Each sample was then injected at a constant rate into the slim tube saturated with the recombined live oil using a 10 cc/hr injection rate until 1.2 pore volumes of the sample gas were injected into the slim tube. Oil recovery, produced oil API gravity, effluent density, effluent composition, and oil gas-to-oil ratio data were measured after every 0.1 pore volume of sample injected. GC analysis of the produced liquid was selectively performed before and after gas breakthrough. At the conclusion of each sample gas injection the slim tube was shut in and attached to a separator to blow the slim tube down to atmospheric pressure. The composition of the liquid produced was measured and the amount of hydrocarbon was calculated. A mass balance on all the oil and produced associated gas (in situ, produced, and residual) was performed to ensure that the mass balance was about 100%.

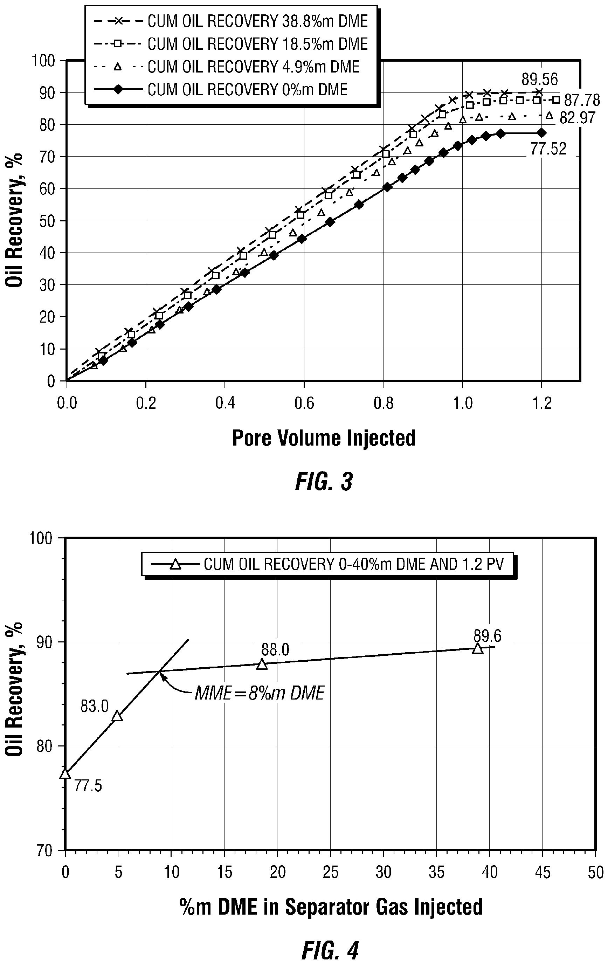

The slim tube oil recovery results for each sample after injection of 1.2 pore volumes of sample are shown in Table 3, and Figure 3 shows the cumulative oil recovery for each sample over the course of the sample injection.

**TABLE 3**

| **DME (mol%) in injected gas** | **% Oil Recovery at 1.2 Pore Volumes** |
|---|---|
| 0 | 77.5 |
| 4.86 | 83.0 |
| 18.53 | 88.0 |
| 38.79 | 89.6 |

Oil recovery improvement relative to injection with the associated gas only was observed with DME at all enrichment levels.

The compositional analysis of the produced dead oil showed that C₂ to C₈ components in the produced oil gradually decreased with increasing pore volumes of gas injection, C₉ to C₂₈ components of the produced oil gradually increased with increasing pore volumes of gas injection, C₂₈ to C₃₅ and C₃₅₊ components in the oil gradually decreased with increasing pore volumes of gas injection, and DME concentrations in the range of 0.16 to 0.28 mol% were observed at various stages of the oil displacement.

As shown in Figure 4, a distinct change in the slope of a plot of oil recovery (%) relative to the amount of DME in the injected gas (mol% DME) indicated that a minimum miscibility enhancement provided by DME in the injected gas occurred at about 8 mol% DME.

### EXAMPLE 2

An oil swelling test was performed to measure the effects of adding 20.74 mol% DME in the oil utilized in Example 1 above. The oil had the characteristics set forth in Table 1 above. For comparison, an oil swelling test was run on a blank sample containing only the oil, and an oil swelling test was performed in which 20 mol% of CO₂ was added to the oil.

The oil swelling tests were conducted in a visual PVT cell. For each test, the cell was charged with a measured volume of live oil (prepared as described in Example 1) at a pressure higher than saturation pressure (38.3 MPa) and at the formation temperature of the formation from which the oil was produced (79.4°C), and 20.7 mol% DME or 20 mol% CO₂. Upon addition of the gas, the cell was pressurized until the fluid reached a single phase. As the cell was pressurized, a constant composition expansion test was conducted to measure the saturation pressure and relative liquid volume below the saturation pressure of the resulting fluid. Upon pressurization to a single phase, the single phase fluid was sampled and measured for the oil formation volume factor, fluid density, compositions of flashed oil and flashed gas, dead oil density, and live oil viscosity in a single stage separator test. These steps were repeated until the system had sufficient gas added such that dewpoint behavior was exhibited. At this point, a small volume of the original live oil was added to make the system behave as a bubble point system. Then the oil density, viscosity (except for CO₂), and the volume of fluid at saturation pressure of the sample were measured. The swelling factor was then calculated, where the swelling factor is the volume of fluid at saturated pressure divided by the volume of oil (without added DME or CO₂) at saturated pressure. Table 4 provides a summary of the effect of adding approximately 20 mol% DME and 20 mol% CO₂ on the oil saturation pressure, the density, the viscosity, and the swelling factor of the oil.

**TABLE 4**

| **Property Change (relative to live oil with no DME or CO₂)** | **DME (about 20 mol%)** | **CO₂(about 20 mol%)** |
|---|---|---|
| **Oil Saturation Pressure** | 32% reduction | 26% increase |
| **Density** | 7% reduction | 1% increase |
| **Viscosity** | 29% reduction | Not measured |
| **Swelling** | 28% increase | 7% increase |

The results indicate that addition of DME decreases the oil saturation pressure, the oil density, and the oil viscosity while increasing the oil swelling factor, which would improve the mobility of oil in a formation. DME was shown to be about 4 times superior to CO₂ in swelling the volume of the oil.

## Claims

1. A method for recovering oil from an oil-bearing formation, comprising:
injecting a hydrocarbon-containing gas comprising at least 70 mol% methane and an ether comprising from 2 to 4 carbon atoms into the formation;
contacting the hydrocarbon-containing gas and the ether with oil in the oil-bearing formation to mix the hydrocarbon-containing gas and the ether with the oil; and
producing oil from the formation.

2. The method of claim 1 wherein contacting the hydrocarbon-containing gas and the ether with oil in the oil-bearing formation to mix the hydrocarbon-containing gas and the ether with the oil mobilizes the contacted oil in the formation.

3. The method of claim 1 or claim 2 wherein the formation is a subterranean formation.

4. The method of claim 3 wherein the subterranean formation is located at a depth of from 200 to 1500 meters.

5. The method of claim 1 or any of claims 2-4 wherein injecting the hydrocarbon-containing gas and the ether into the formation comprises injecting a mixture of the hydrocarbon-containing gas and the ether into the formation.

6. The method of claim 1 or any of claims 2-5 wherein at least a portion of the hydrocarbon-containing gas is produced from the formation.

7. The method of claim 1 or any of claims 2-6 wherein at least a portion of the ether is produced from the formation.

8. The method of claim 1 or any of claims 2-7 wherein the pressure of the formation at a location in the formation where the hydrocarbon-containing gas and the ether are contacted with the oil in the formation is below the minimum miscibility pressure of the hydrocarbon-containing gas with the oil in the formation.

9. The method of claim 8 wherein the pressure of the formation at the location in the formation where the hydrocarbon-containing gas and the ether are contacted with the oil in the formation is above the minimum miscibility pressure of the mixture of the hydrocarbon-containing gas and the ether with the oil.

10. The method of claim 1 or any of claims 2-9 wherein the oil in the formation has a viscosity of at most 15 cP prior to contact with the hydrocarbon-containing gas and the ether.

11. The method of claim 1 or any of claims 2-10 wherein a displacement fluid is injected into the formation subsequent to the injection of the hydrocarbon-containing gas and ether into the formation.

12. The method of claim 11 wherein the displacement fluid is water.

13. The method of claim 1 or any of claims 2-12 wherein the ether is dimethyl ether.

14. The method of claim 1 or any of claims 2-13 wherein the formation has a pressure of at most 45 MPa, or at most 40 MPa, or from 5 MPa to 45 MPa, or from 10 MPa to 40 MPa.

15. The method of claim 1 wherein the method comprises injecting into the formation a mixture of the hydrocarbon-containing gas and the ether wherein the amount of the ether in the mixture is at least 5 mol%.

## Patentansprüche

1. Verfahren zum Gewinnen von Öl aus einer ölhaltigen Formation, das Folgendes umfasst:
Einspritzen eines kohlenwasserstoffhaltigen Gases, das mindestens 70 Mol-% Methan umfasst, und eines Ethers, der von 2 bis 4 Kohlenstoffatome umfasst, in die Formation;
Inkontaktbringen des kohlenwasserstoffhaltigen Gases und des Ethers mit Öl in der ölhaltigen Formation, um das kohlenwasserstoffhaltige Gas und den Ether mit dem Öl zu vermischen; und
Gewinnen von Öl aus der Formation.

2. Verfahren nach Anspruch 1, wobei das Inkontaktbringen des kohlenwasserstoffhaltigen Gases und des Ethers mit dem Öl in der ölhaltigen Formation zum Mischen des kohlenwasserstoffhaltigen Gases und des Ethers mit dem Öl das in Kontakt gebrachte Öl in der Formation mobilisiert.

3. Verfahren nach Anspruch 1 oder Anspruch 2, wobei die Formation eine unterirdische Formation ist.

4. Verfahren nach Anspruch 3, wobei die unterirdische Formation in einer Tiefe von 200 bis 1500 Metern liegt.

5. Verfahren nach Anspruch 1 oder einem der Ansprüche 2 - 4, wobei das Einspritzen des kohlenwasserstoffhaltigen Gases und des Ethers in die Formation das Einspritzen einer Mischung des kohlenwasserstoffhaltigen Gases und des Ethers in die Formation umfasst.

6. Verfahren nach Anspruch 1 oder einem der Ansprüche 2 - 5, wobei mindestens ein Teil des kohlenwasserstoffhaltigen Gases aus der Formation gewonnen wird.

7. Verfahren nach Anspruch 1 oder einem der Ansprüche 2 - 6, wobei mindestens ein Teil des Ethers aus der Formation gewonnen wird.

8. Verfahren nach Anspruch 1 oder einem der Ansprüche 2 - 7, wobei der Druck der Formation an einer Stelle in der Formation, an der das kohlenwasserstoffhaltige Gas und der Ether in Kontakt mit dem Öl in der Bildung stehen, unterhalb des Mindestmischbarkeitsdruckes des kohlenwasserstoffhaltigen Gases mit dem Öl in der Formation liegt.

9. Verfahren nach Anspruch 8, wobei der Druck der Formation an der Stelle in der Formation, an der das kohlenwasserstoffhaltige Gas und der Ether in Kontakt mit dem Öl in der Formation stehen, über dem Mindestmischbarkeitsdruck der Mischung des kohlenwasserstoffhaltigen Gases und des Ethers mit dem Öl liegt.

10. Verfahren nach Anspruch 1 oder einem der Ansprüche 2 - 9, wobei das Öl in der Formation eine Viskosität von höchstens 15 cP aufweist, bevor es mit dem kohlenwasserstoffhaltigen Gas und dem Ether in Kontakt kommt.

11. Verfahren nach Anspruch 1 oder einem der Ansprüche 2 - 10, wobei nach dem Einspritzen des kohlenwasserstoffhaltigen Gases und des Ethers in die Formation ein Verdrängungsfluid in die Formation eingespritzt wird.

12. Verfahren nach Anspruch 11, wobei das Verdrängungsfluid Wasser ist.

13. Verfahren nach Anspruch 1 oder einem der Ansprüche 2 - 12, wobei der Ether Dimethylether ist.

14. Verfahren nach Anspruch 1 oder einem der Ansprüche 2 - 13, wobei die Formation einen Druck von höchstens 45 MPa aufweist, oder höchstens 40 MPa, oder von 5 MPa bis 45 MPa, oder von 10 MPa bis 40 MPa.

15. Verfahren nach Anspruch 1, wobei das Verfahren das Einspritzen einer Mischung des kohlenwasserstoffhaltigen Gases und des Ethers in die Formation umfasst, wobei die Menge des Ethers in der Mischung mindestens 5 Mol-% beträgt.

## Revendications

1. Procédé de récupération de pétrole à partir d'une formation pétrolifère, comprenant :
l'injection d'un gaz contenant des hydrocarbures comprenant au moins 70 % en moles de méthane et d'un éther comprenant de 2 à 4 atomes de carbone dans la formation ;
la mise en contact du gaz contenant des hydrocarbures et l'éther avec du pétrole dans la formation pétrolifère pour mélanger le gaz contenant des hydrocarbures et l'éther avec le pétrole ; et
la production de pétrole à partir de la formation.

2. Procédé selon la revendication 1 dans lequel la mise en contact du gaz contenant des hydrocarbures et de l'éther avec du pétrole dans la formation pétrolifère pour mélanger le gaz contenant des hydrocarbures et l'éther avec le pétrole mobilise le pétrole mis en contact dans la formation.

3. Procédé selon la revendication 1 ou la revendication 2 dans lequel la formation est une formation souterraine.

4. Procédé selon la revendication 3 dans lequel la formation souterraine est située à une profondeur de 200 à 1 500 mètres.

5. Procédé selon la revendication 1 ou l'une quelconque des revendications 2 à 4 dans lequel l'injection du gaz contenant des hydrocarbures et de l'éther dans la formation comprend l'injection d'un mélange du gaz contenant des hydrocarbures et de l'éther dans la formation.

6. Procédé selon la revendication 1 ou l'une quelconque des revendications 2 à 5 dans lequel au moins une partie du gaz contenant des hydrocarbures est produite à partir de la formation.

7. Procédé selon la revendication 1 ou l'une quelconque des revendications 2 à 6 dans lequel au moins une partie de l'éther est produite à partir de la formation.

8. Procédé selon la revendication 1 ou l'une quelconque des revendications 2 à 7 dans lequel la pression de la formation au niveau d'un emplacement dans la formation où le gaz contenant des hydrocarbures et l'éther sont mis en contact avec le pétrole dans la formation est en dessous de la pression de miscibilité minimale du gaz contenant des hydrocarbures avec le pétrole dans la formation.

9. Procédé selon la revendication 8 dans lequel la pression de la formation au niveau de l'emplacement dans la formation où le gaz contenant des hydrocarbures et l'éther sont mis en contact avec le pétrole dans la formation est au-dessus de la pression de miscibilité minimale du mélange du gaz contenant des hydrocarbures et de l'éther avec le pétrole.

10. Procédé selon la revendication 1 ou l'une quelconque des revendications 2 à 9 dans lequel le pétrole dans la formation a une viscosité d'au plus 15 cP avant la mise en contact avec le gaz contenant des hydrocarbures et l'éther.

11. Procédé selon la revendication 1 ou l'une quelconque des revendications 2 à 10 dans lequel un fluide de déplacement est injecté dans la formation après l'injection du gaz contenant des hydrocarbures et de l'éther dans la formation.

12. Procédé selon la revendication 11 dans lequel le fluide de déplacement est l'eau.

13. Procédé selon la revendication 1 ou l'une quelconque des revendications 2 à 12 dans lequel l'éther est l'éther diméthylique.

14. Procédé selon la revendication 1 ou l'une quelconque des revendications 2 à 13 dans lequel la formation a une pression d'au plus 45 MPa, ou d'au plus 40 MPa, ou de 5 MPa à 45 MPa, ou de 10 MPa à 40 MPa.

15. Procédé selon la revendication 1 dans lequel le procédé comprend l'injection dans la formation d'un mélange du gaz contenant des hydrocarbures et de l'éther dans lequel la quantité d'éther dans le mélange est d'au moins 5 % en moles.
